# EUROPEAN PATENT SPECIFICATION

(11) **EP 3 094 483 B1**
(45) Date of publication and mention of the grant of the patent: **11.10.2023**
(21) Application number: 14830690.5
(22) Date of filing: 17.12.2014
(51) Int. Cl.: B32B 5/18, B32B 15/08, E04B 1/74, E04B 1/76

(54) **SUPPORT LAYER OF AN INSULATION PANEL FOR CONSTRUCTION**
TRÄGERSCHICHT EINER ISOLIERPLATTE FÜR DAS BAUWESEN
COUCHE DE SUPPORT D'UN PANNEAU ISOLANT POUR LA CONSTRUCTION

(30) Priority: 17.01.2014 IT MI20140054
(43) Date of publication of application: 23.11.2016
(60) Divisional application: 17166024.4
(73) Proprietor: Silcart S.p.A., 31030 Carbonera, Frazione Mignagola TV (IT)
(72) Inventor: FAOTTO, Ugo, I-31030 Carbonera (TV) (IT)
(74) Representative: Mozzi, Matteo
(86) International application number: PCT/IB2014/067005
(87) International publication number: WO 2015/107403

(56) References cited:
- EP-A1- 2 650 118
- US-A1- 2014 127 443

## Description

The present invention relates to a backing layer of a multilayer insulating panel for building constructions. In particular, the invention relates to a backing layer of a gas-tight type panel having increased flame retardant properties.

From the point of view of energy saving, in the building industry the need is increasingly felt to thermally insulate buildings in order to promote a good diffusion of heat inside the premises and, at the same time, avoid its dispersion to the outside. To this end, multilayer insulation panels are widely used in buildings, for example to ensure the thermal insulation of walls, floors and roofs. Such insulation panels generally comprise an insulation layer, for example made in polyurethane foam, sandwiched between two respective backing layers suitable for covering the insulation layer. Said backing layers perform a dual role: on the one hand they limit the expansion of the polyurethane foam, and on the other provide said panels with a predefined shape and thickness, at the same time ensuring dimensional stability to the panels.

For such applications, rigid polyurethane foam has recently proven highly successful given that, having a mean coefficient of thermal conductivity λ [W m ⁻¹ K ⁻¹ ] lower than other commercial insulating materials, it makes it possible to obtain a good thermal insulation using panels of lesser thickness. Consequently, for the same insulation effects, the insulation panels for buildings using polyurethane foam have reduced volumes and weights compared to insulation panels made with other insulation materials.

As is known, the reduced thermal conductivity of polyurethane foam and similar synthetic foam products (polystyrene, styrene) is due to their cellular structure: in these foams about 3% -5% in volume is composed of the polymer and the remaining 97% -95% of a gaseous phase of expanding agents enclosed in closed cells. The small amount of the polymer and the gaseous phase limit the thermal conduction, while the limited size of the closed cells limits the thermal convection between the gas and the inner surface of such cells.

The phenomenon that most prejudices the performance of these cellular structures is the partial diffusion of the gaseous phase to the outside of the panel. Such diffusion needs to be minimised as much as possible to maintain the insulating properties of the panel substantially unchanged over time.

Insulating panels for buildings are known of in which the phenomenon of diffusion of the gaseous phase is limited by the application on both sides of the panel of a coating impermeable to diffusion, i.e. a gas-tight coating. For example, the insulating panels containing polyurethanes (PUR) or polyisocyanurate (PIR) with a gas-tight coating currently on the market are made using a metal coating applied to the faces of the panel, in particular a single layer or sheet of aluminium or a sheet backed with plastic films, paper or fibreglass.

For such insulating panels containing insulating foam with cellular structure, the performance in terms of fire resistance of the panel depends mainly on the type of backing layers used. For example, for an insulating panel to be classified B or C fire resistant according to the standard EN 13501-11925/2, i.e. to ensure adequate fire-resistance, even after a thermal shock arising from direct contact with flames during a fire, the backing layers in aluminium are required to be more than 80 µm thick. The disadvantage of panels with aluminium backing layers is mainly related to the cost of manufacturing thick aluminium layers which significantly affects the overall cost of the panel. Document EP 2650118 A1 discloses a fire retardant insulating construction panel comprising an insulation layer that comprises a foam. The construction panel comprises at least one composite fire retardant layer bonded to the insulation layer; the fire retardant layer comprises a reinforcement layer comprising at least one carrier layer and at least one substrate layer bonded to the carrier layer.

Document US 2014/127443 A1 describes a building material comprising a substrate layer and a pressure-sensitive adhesive layer including expandable graphite.

The main object of the present invention is to devise and making available an insulating panel for buildings including a backing layer which, while maintaining substantially unchanged the gas-tight properties of the panel over time, also makes it possible to improve the fire retardant properties of the panel while limiting the production costs thereof.

Such purpose is achieved by an insulating panel for building constructions according to claim 1.

Preferred embodiments of such insulating panel are described in the dependent claims 2-6.

Further characteristics and advantages of the backing layer for an insulating panel according to the invention will, in any case, be evident from the description given below of its preferred embodiments, made by way of a non-limiting example with reference to the appended drawings, wherein:
- **Figure 1** illustrates, in a schematic, exploded view, a section of a multilayer insulating panel for building constructions comprising backing layers according to the invention in a first embodiment;
- **Figure 2** schematically illustrates a second embodiment of the backing layer for insulating panels according to the invention.

In the aforementioned drawings, elements which are the same or similar will be indicated using the same reference numerals.

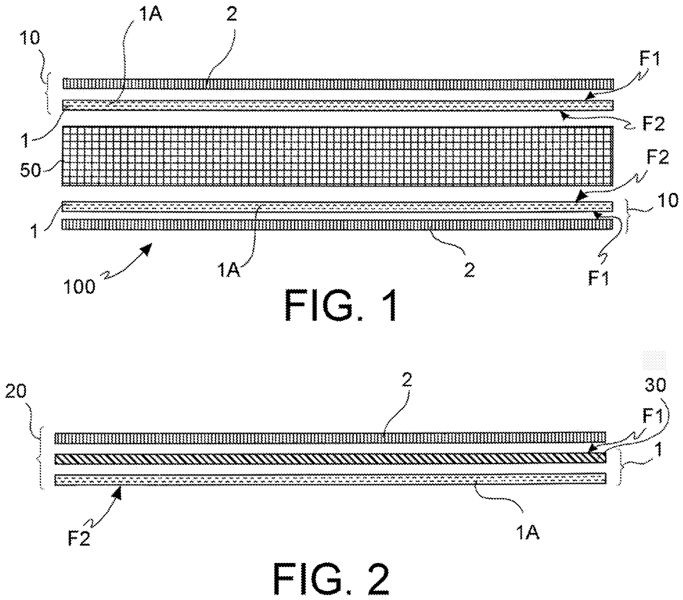

With reference to figure 1, backing layers of a multilayer insulating panel 100 for building constructions of the gas-tight type according to the invention are denoted by reference numeral 10.

Such insulating panel 100 may be used in the building industry to cover walls (vertical and horizontal), floors and roofs.

Such insulating panel 100 comprises a central body 50 composed of a cellular structure insulating foam such as polyurethane (PUR) foam or polyisocyanurate (PIR) foam, phenolic or polystyrene foam (PS).

In the embodiment shown in figure 1, said central body 50 of the panel 100 is interposed or sandwiched between the two analogous backing layers 10 of the invention. In an alternative embodiment the central body 50 of the panel may be placed between a backing layer 10 and a finishing layer, having gas-tight properties, different from the aforesaid backing layer as will be explained in more detail below.

Such backing layers 10 are configured to limit the expansion of the polyurethane (or polyisocyanurate) foam during the manufacturing stages of the panels 100. Moreover, the backing layers 10 are suitable to give the panels 100 a predetermined shape and a thickness while ensuring the dimensional stability of said panels.

Each of the aforesaid backing layers 10 comprises a gas-tight reinforcement layer 1 comprising a first surface F1 and an opposite second surface F2.

In one embodiment, the gas-tight reinforcement layer 1 of the backing 10 is composed of a layer of metal 1A, for example of aluminium. In an alternative embodiment such gas-tight reinforcement layer 1 takes the form of a plastic film or a metallised plastic film.

In addition, the backing layer 10 comprises a fire-resistant layer 2 operatively associated to the first surface F1 of the reinforcement layer 1.

In one embodiment, such fire-resistant layer 2 is in an expandable material and comprises, in particular, expandable graphite.

In particular, the aforesaid fire-resistant layer 2 is made using a mixture comprising for example, the expandable graphite, a plastifying resin and additives. In one embodiment, said mixture of the fire-resistant layer 2 comprises:
- a plastifying resin in a percentage comprised between about 40% and 55%;
- expandable graphite in a percentage comprised between about 35% and 50%;
- additives in a percentage of about 10%.

In particular such additives comprise:
- water in a percentage comprised between about 4% and 9.4%;
- an anti-foaming agent in a percentage comprised between about 0.2% and 2%;
- a plastification-retardant dispersing agent in a percentage comprised between about 0.2% and 2%.

In particular, the aforesaid resin is a polymeric dispersion of polymers or copolymers such as for example, acrylics, vinyls, silicone, silanes, siloxanes polyurethanes, to which at least one flame retardant additive is possibly added.

Moreover, the resin is configured to englobe the expandable graphite, in particular creating a film which binds such graphite to the backing 10. In other words, the resin is suitable for plastifying the fire-resistant layer 2, at the same time providing a contribution to the fire resistance of said backing layer 10 by means of the further flame retardant additive contained therein.

The expandable graphite of the fire-resistant layer 2, if subjected to temperatures to the order of about 200°C begins to expand, reaching a maximum expansion when placed in contact with the flames, i.e. at temperatures of about 600-1000°C. It is to be noted that, in the presence of flames, the graphite can increase its volume from about 50 to about 400 times. Advantageously, the fire-resistant layer 2 with expandable graphite comprised in the backing layer 10 of the panel 100, in the presence of flames, is suitable to expand to create a barrier layer which keeps the flames away from the central body 50 in polyurethane or, at least, slows down the advance thereof towards said central body inside the panel 100.

With reference to figure 2, in a second embodiment of the backing layer 20 of the invention, the aforementioned reinforcement layer 1 comprises a layer of fibrous material 30 in addition to a metal layer or to the gas-tight plastic film 1A. It is to be noted that said fibrous layer 30 of the reinforcement layer 1 is suitable to confer greater mechanical strength to the backing layer 20 of the panel 100. Such fibrous layer 30 of the reinforcement layer 1 is made of a material selected from the group consisting of:
- a synthetic fabric or a synthetic non-woven fabric;
- glass fibre;
- a composite synthetic fabric or a composite synthetic non-woven fabric;
- a natural fabric or a natural non-woven fabric;
- a synthetic, natural, or composite mesh;
- a glass fibre mesh.
Again, in a further embodiment, the reinforcement layer 1 may be made as a multilayer comprising a metal layer, a plastic film and a fibrous layer in different combinations thereof.

It is to be noted that in the case of a panel 100 comprising two backing layers 1 having the same stratigraphy, as shown in figure 1, such panel has fire retardant properties on both sides, in addition to the gas-tight properties. Alternatively, one of the two backing layers may be simply a finishing layer made of a traditional gas-tight material, such as for example, aluminium, multilayer film comprising paper, aluminium and films in plastic materials in various combinations or other metal materials.

One embodiment of the manufacturing method of the backing layer 10 (or 20) of the insulating panel 100 in which the fire-resistant layer 2 is made starting from the mixture comprising the expandable graphite and plastifying resin is described below.

In particular, starting from a reinforcement layer 1, for example of aluminium (with or without the layer of fibrous material 30), the method comprises a first step of spreading on said reinforcement layer the fluid mixture comprising the expandable graphite, the resin and the additives (water, anti-foaming agent, dispersing agent).

Subsequently, the method comprises a drying step, for example in a hot air furnace, of the backing layer 10 (or 20). Said drying step permits the drying and plastifying of the resin of the fire resistant layer 2.

It is to be noted that the production line of the backing layer 10 (20) works continuously with a roll to roll system wherein the reinforcement layer 1, comprising for example a sheet of aluminium and a layer of glass fibre, is unwound, the various materials deposited and the backing layer 10 (20) obtained once dry, rewound.

For the manufacture of the insulating panel 100, a first embodiment provides for a step of spraying the polyurethane foam between the two backing layers 10 (or 20). Such backing layers are suitable to limit, between the respective second surfaces F2 of the reinforcement layer 1, the expansion of the polyurethane foam forming the central insulating body 50.

A second embodiment of the panel 100 provides for gluing the backing layers 10 (or 20) onto the opposite surfaces of the pre-formed central insulating body 50. Alternatively, the backing layer 10 (or 20) can be laid, in a manner of a sheet, over the insulating layer during the laying of said insulating material, for example on a roof, to form an additional fire resistant layer for said insulating layer. In particular, the backing layer 10 (or 20) may also be laid on fibrous, natural or mineral insulating materials.

The backing layers of the insulating panels 100 according to the invention have numerous advantages.

Mainly, said backing layers 10, 20 give increased fire resistance properties to the insulating panel 100, in particular if said backing layers are applied to both opposite surfaces of the insulating central body 50 with insulating foam. In fact, the backing layers 10, 20 protect from fire both the gas-tight reinforcement layer 1 and the central body 50 in insulating foam, preventing or slowing down the advancement of the flames toward the inside of the panel 100.

With the backing layers 10, 20 of the invention it is no longer necessary to use thick layers of aluminium to achieve the same performance in terms of fire-resistance of the gas-tight panels of known type. As a result, the total production costs of the gas-tight panel 100 using the backing layers 10, 20 are significantly reduced.

Furthermore, the gas-tight reinforcement layer 1 permits a substantially uniform and homogeneous distribution of the fire-resistant layer 2 thereby enhancing the barrier properties to the flames.

In addition, the Applicant has verified that the gas-tight reinforcement layer 1 of the backing layer 10, 20, by preventing the diffusion towards the outside of the panel itself of the gases and fumes which may develop in the panel under the backing, creates an additional barrier operating in synergy with the fire-retardant layer 2.

Moreover, when two or more insulating panels 100 with the backing layers 10, 20 according to the invention are placed adjacent to each other, the use of expandable graphite in the respective fire-resistant layers 2 permits, in the case of fire, the protection of the junctions between such adjacent panels. In fact, the expansion of the graphite as the temperature increases makes it possible to seal such junctions.

This solves a particularly relevant drawback of the panels of the prior art comprising gas-tight metal layers. In fact, such known panels currently require sealing-taping operations at the joins to also protect the joins between such adjacent panels from the fire.

Furthermore, the layer of fire retardant coating 2 of the backing layers 10, 20, is water resistant and has high resistance to foot traffic and abrasion. In other words, the layer of fire retardant coating 2 protects the gas-tight reinforcement layer 1, and in particular during the installation operations of the panels 100, prevents possible damage of the gas-tight aluminium layer which would jeopardise the barrier properties to the diffusion of gas, and, consequently, the thermal insulation properties of the entire panel.

Lastly, glues, plasters, resins and mortars may be applied to the fire-resistant layer 2 which would not adhere to smooth substrates such as aluminium sheets or plastic films.

## Claims

1. A multilayered insulating panel (100) for building constructions comprising a central body (50), composed of a cellular structure insulating foam, a first backing layer (10; 20) and a second backing layer,
said central body (50) being interposed between the first backing layer (10; 20) and the second backing layer;
the second backing layer being analogous to said first backing layer (10; 20) or
consisting in a finishing layer having gas-tight properties and being different from said first backing layer (10; 20);
said first backing layer (10; 20) comprising:
- a reinforcement layer (1) comprising a first surface (F1) and an opposite second surface (F2), the second surface (F2) of the reinforcement layer (1) being applied to one of two opposite surfaces of the insulating central body (50);
- a fire-resistant layer (2) operatively associated to said first surface (F1) of the reinforcement layer (1), said fire-resistant layer (2) being made of an expandable material comprising expandable graphite, wherein
said reinforcement layer (1) is a gas-tight reinforcement layer and comprises a plastic film.

2. The multilayered insulating panel (100) according to claim 1, wherein said fire-resistant layer (2) is made by using a mixture comprising the expandable graphite, a plastifying resin and additives.

3. The multilayered insulating panel (100) according to claim 2, wherein the mixture of said fire-resistant layer (2) comprises:
- the plastifying resin, in a percentage ranging between 40% and 55%;
- the expandable graphite, in a percentage ranging between 35% and 50%;
- water in a percentage ranging between 4% and 9.4%;
- an antifoaming agent, in a percentage ranging between 0.2% and 2%;
- a plastification-retardant dispersing agent in a percentage ranging between 0.2% and 2%.

4. The multilayered insulating panel (100) according to claim 3, wherein said plastifying resin comprises a dispersion of polymers or copolymers and at least of a flame-retardant additive.

5. The multilayered insulating panel (100) according to claim 1, wherein said gas-tight reinforcement layer (1) of the first backing layer (20) comprises, in addition to the plastic film, a fibrous material layer (30).

6. The multilayered insulating panel (100) according to claim 5, wherein said fibrous layer (30) of the reinforcement layer (1) is made of a material selected from the group consisting of:
- a synthetic fabric or a synthetic non-woven fabric;
- glass fibre;
- a composite synthetic fabric or a composite synthetic non-woven fabric;
- a natural fabric or a natural non-woven fabric;
- a synthetic, natural, or composite mesh;
- a glass fibre mesh.

## Patentansprüche

1. Mehrschichtige Isolierplatte (100) für Baukonstruktionen umfassend einen zentralen Körper (50), zusammengesetzt aus einem isolierenden Schaum mit einer zellulären Struktur, einer ersten Trägerschicht (10; 20) und einer zweiten Trägerschicht,
wobei der zentrale Körper (50) zwischen der ersten Trägerschicht (10; 20) und der zweiten Trägerschicht angeordnet ist;
wobei die zweite Trägerschicht analog zur ersten Trägerschicht (10; 20) ist oder aus einer Verarbeitungsschicht mit gasdichten Eigenschaften besteht und sich von der ersten Trägerschicht (10; 20) unterscheidet;
wobei die erste Trägerschicht (10; 20) umfasst:
- eine Verstärkungsschicht (1), umfassend eine erste Oberfläche (F1) und eine gegenüberliegende zweite Oberfläche (F2), wobei die zweite Oberfläche (F2) der Verstärkungsschicht (1) auf eine von zwei gegenüberliegenden Oberflächen des isolierenden zentralen Körpers (50) aufgebracht ist;
- eine feuerbeständige Schicht (2), die operativ mit der ersten Oberfläche (F1) der Verstärkungsschicht (1) verbunden ist, wobei die feuerbeständige Schicht (2) aus einem expandierbaren Material hergestellt ist, das expandierbaren Graphit umfasst,
wobei die Verstärkungsschicht (1) eine gasdichte Verstärkungsschicht ist und eine Kunststofffolie umfasst.

2. Mehrschichtige Isolierplatte (100) nach Anspruch 1, wobei die feuerbeständige Schicht (2) unter Verwendung einer Mischung hergestellt ist, umfassend expandierbaren Graphit, ein plastifizierendes Harz und Additive.

3. Mehrschichtige Isolierplatte (100) nach Anspruch 2, wobei die Mischung der feuerbeständigen Schicht (2) umfasst:
- das plastifizierende Harz in einem Prozentsatz im Bereich zwischen 40% und 55%;
- den expandierbaren Graphit in einem Prozentsatz im Bereich zwischen 35% und 50%;
- Wasser in einem Prozentsatz im Bereich zwischen 4% und 9,4%;
- ein Antischaummittel in einem Prozentsatz im Bereich zwischen 0,2% und 2%;
- ein plastifizierungshemmendes Dispergiermittel in einem Prozentsatz im Bereich zwischen 0,2% und 2%.

4. Mehrschichtige Isolierplatte (100) nach Anspruch 3, wobei das plastifizierende Harz eine Dispersion von Polymeren oder Copolymeren und mindestens ein flammhemmendes Additiv umfasst.

5. Mehrschichtige Isolierplatte (100) nach Anspruch 1, wobei die gasdichte Verstärkungsschicht (1) der ersten Trägerschicht (20) zusätzlich zu der Kunststofffolie eine Fasermaterialschicht (30) umfasst.

6. Mehrschichtige Isolierplatte (100) nach Anspruch 5, wobei die Faserschicht (30) der Verstärkungsschicht (1) aus einem Material hergestellt ist, das aus der Gruppe ausgewählt ist, bestehend aus:
- einem synthetischen Gewebe oder einem synthetischen Vliesstoff;
- Glasfaser;
- einem synthetischen Kompositgewebe oder einem synthetischen Kompositvliesstoff;
- einem natürlichen Gewebe oder einem natürlichen Vliesstoff;
- einem synthetischen, natürlichen oder Komposit-Netz;
- einem Glasfasernetz.

## Revendications

1. Panneau isolant multicouche (100) pour des constructions de bâtiment comprenant un corps central (50), composé d'une mousse isolante à structure alvéolaire, une première couche de renfort (10 ; 20) et une seconde couche de renfort, ledit corps central (50) étant interposé entre la première couche de renfort (10 ; 20) et la seconde couche de renfort ;
la seconde couche de renfort étant analogue à ladite première couche de renfort (10 ; 20) ou consistant en une couche de finition ayant des propriétés étanches aux gaz et étant différente de ladite première couche de renfort (10 ; 20) ;
ladite première couche de renfort (10 ; 20) comprenant :
- une couche de renforcement (1) comprenant une première surface (F1) et une seconde surface opposée (F2), la seconde surface (F2) de la couche de renforcement (1) étant appliquée sur l'une de deux surfaces opposées du corps central isolant (50) ;
- une couche ignifuge (2) fonctionnellement associée à ladite première surface (F1) de la couche de renforcement (1), ladite couche ignifuge (2) étant constituée d'un matériau expansible comprenant du graphite expansible, dans lequel
ladite couche de renforcement (1) est une couche de renforcement étanche aux gaz et comprend un film plastique.

2. Panneau isolant multicouche (100) selon la revendication 1, dans lequel ladite couche ignifuge (2) est réalisée en utilisant un mélange comprenant le graphite expansible, une résine plastifiante et des additifs.

3. Panneau isolant multicouche (100) selon la revendication 2, dans lequel le mélange de ladite couche ignifuge (2) comprend :
- la résine plastifiante, selon un pourcentage compris entre 40 % et 55 % ;
- le graphite expansible, selon un pourcentage compris entre 35 % et 50 % ;
- de l'eau selon un pourcentage compris entre 4 % et 9,4 % ;
- un agent anti-mousse, selon un pourcentage compris entre 0,2 % et 2 % ;
- un agent dispersant retardateur de plastification selon un pourcentage compris entre 0,2 % et 2 %.

4. Panneau isolant multicouche (100) selon la revendication 3, dans lequel ladite résine plastifiante comprend une dispersion de polymères ou copolymères et au moins un additif ignifuge.

5. Panneau isolant multicouche (100) selon la revendication 1, dans lequel ladite couche de renforcement étanche aux gaz (1) de la première couche de renfort (20) comprend, en plus du film plastique, une couche de matériau fibreux (30).

6. Panneau isolant multicouche (100) selon la revendication 5, dans lequel ladite couche fibreuse (30) de la couche de renforcement (1) est constituée d'un matériau choisi dans le groupe consistant en :
- un tissu synthétique ou un tissu non tissé synthétique ;
- une fibre de verre ;
- un tissu synthétique composite ou un tissu non tissé synthétique composite ;
- un tissu naturel ou un tissu non tissé naturel ;
- une maille synthétique, naturelle, ou composite ;
- une maille en fibre de verre.
